# EUROPÄISCHE PATENTSCHRIFT

(11) **EP 4 233 502 B1**
(45) Veröffentlichungstag und Bekanntmachung des Hinweises auf die Patenterteilung: **01.04.2026**
(21) Anmeldenummer: 23156531.8
(22) Anmeldetag: 14.02.2023
(51) Int. Cl.: A01B 25/00, A01B 49/06, A01B 73/04

(54) **BODENBEARBEITUNGSMASCHINE MIT VERTEILERVORRICHTUNG**
SOIL WORKING MACHINE WITH DISTRIBUTING DEVICE
MACHINE DE TRAVAIL DU SOL AVEC DISPOSITIF DE DISTRIBUTION

(30) Priorität: 23.02.2022 DE 102022104251
(43) Veröffentlichungstag der Anmeldung: 30.08.2023
(73) Patentinhaber: Horsch Maschinen GmbH, 92421 Schwandorf (DE)
(72) Erfinder: SCHMID, Benjamin, 92421 Schwandorf (DE)
(74) Vertreter: v. Bezold & Partner Patentanwälte - PartG mbB

(56) Entgegenhaltungen:
- EP-B1- 0 586 945
- WO-A1-03/039237
- WO-A1-98/03053
- CN-U- 211 880 928
- DE-A1- 102007 014 791
- GB-A- 1 197 626
- IT-A1- RM20 130 332
- US-A1- 2012 247 378
- US-A1- 2021 127 554

## Beschreibung

Die Erfindung betrifft eine insbesondere landwirtschaftliche Bodenbearbeitungsmaschine, vorzugsweise zur zeitgleichen Bodenbearbeitung (z. B. mechanischen Unkrautbekämpfung) und Verteilung von zweckmäßig granularem (z. B. körnigem) und/oder festem Verteilgut (z. B. Dünger und/oder Saatgut).

WO 03/039237 A1 offenbart eine Drillmaschine für das Direktsaat-und/oder Mulchsaatverfahren mit einem sich über Laufräder auf dem Boden abstützenden Rahmen, an dem in mehreren Querreihen auf Lücke und beabstandet zueinander vorzugsweise mittels Tiefenführungsrollen in ihrer Eingriffstiefe in den Boden geführte Säschare in aufrechter Ebene bewegbar nebeneinander angeordnet sind, wobei hinter den Säscharen und vorzugsweise hinter den Laufrädern über eine Kupplungsvorrichtung an dem Rahmen ein Bodenbearbeitungsgerät mit Bodenbearbeitungswerkzeugen angeordnet ist, wobei die Bodenbearbeitungswerkzeuge als in den Boden eingreifende Werkzeuge ausgebildet sind, die Werkzeuge in mehreren Querreihen hintereinander und beabstandet sowie auf Lücke zueinander angeordnet sind, und jeweils ein Werkzeug in Fahrtrichtung) gesehen in dem Zwischenraum von zwei Säscharen angeordnet ist.

WO 98/03053 A1 offenbart ein integriertes Bodenbearbeitungsgerät, das dazu bestimmt ist, an das Heck eines Antriebsfahrzeugs gekoppelt zu werden und während der Vorwärtsbewegung des Geräts durch das Fahrzeug eine Reihe unterschiedlicher Bodenbearbeitungsvorgänge durchzuführen, umfassend einen Rahmen, eine Kupplungsanordnung am vorderen Ende des Rahmens, um die Vorrichtung an das Heck des Antriebsfahrzeugs zu koppeln, sich quer erstreckende Reihen von Eggenzinken, die am Rahmen montiert sind, einen walzenartigen Bodenpacker, der am Rahmen montiert ist und sich im Allgemeinen parallel zu den Reihen der Eggenzinken erstreckt, wobei der Packer relativ zum Rahmen verstellbar ist, so dass der Eingriff des Packers mit dem Boden gesteuert wird Arbeitstiefe der Eggenzinken, und eine erste, quer verlaufende Reihe von Säscharen, die am Rahmen montiert sind, und eine zweite, quer verlaufende Reihe von Düngerverteilungsscharen, die ebenfalls am Rahmen montiert sind.

Landwirtschaftliche Bodenbearbeitungsmaschinen mit mehreren nebeneinander angeordneten Bodenbearbeitungswerkzeugen zur mechanischen Unkrautbekämpfung sind im Stand der Technik in den unterschiedlichsten Ausführungsformen bekannt, wobei hierzu z. B. auf die DE 10 2020 111 400 A1 und die DE 10 2019 122 712 A1 verwiesen werden kann. Um die Arbeitseffizienz von Bodenbearbeitungsmaschinen zu erhöhen, ist es z. B. aus der DE 1 607 385 A1 bekannt, zusätzlich Spritzvorrichtungen zum Verspritzen von flüssigem Pflanzenschutzmittel zu nutzen.

Soll eine Bodenbearbeitungsmaschine wie z. B. ein sogenannter Hackstriegel zusätzlich genutzt werden, um granulares Verteilgut auszubringen, so besteht ein Problem insbesondere in der Anordnung der hierfür erforderlichen Vorrichtungen (z. B. Vorratsbehälter, Verteilervorrichtung, Verteilgutleitungen etc.). Das Problem besteht insbesondere bei Bodenbearbeitungsmaschinen mit großen Arbeitsbreiten. Ein Problem besteht insbesondere dann, wenn bei einem Hackstriegel als Verteilervorrichtung ein sogenannter Verteilerturm zum Aufteilen von Verteilgut an eine Vielzahl an Ausbringelementen genutzt werden soll, insbesondere, wenn die Zinken des Hackstriegels in einem Strichabstand quer zur Arbeitsrichtung des Hackstriegels von z. B. kleiner als 10cm zueinander angeordnet sind. Außerdem wird die Anordnung von Verteilertürmen und z. B. Vorratsbehältern erschwert, wenn der Hackstriegel schwenkbar angeordnete Zinken-Seitenteile aufweisen soll, um für eine Transportfahrt auf z. B. eine maximal zulässige Transportbreite von 3 Meter zusammengeklappt werden zu können, wodurch im Übrigen auch die Gefahr von Quetschungen von Verteilgutleitungen bestehen kann.

Eine Aufgabe der Erfindung ist es, eine Bodenbearbeitungsmaschine, insbesondere mit einer großen Arbeitsbreite, zu schaffen, die zur zeitgleichen Bodenbearbeitung und Verteilung von zweckmäßig granularem und/oder festem Verteilgut ausgeführt ist und vorzugsweise eine optimierte Anordnung einer oder mehrerer Verteilervorrichtungen aufweist und/oder trotz großer Arbeitsbreite zur Einhaltung z. B. gesetzlich maximal zulässiger Transportmaße geeignet ist.

Die Aufgabe kann durch die Merkmale des unabhängigen Anspruchs gelöst werden. Vorteilhafte Weiterbildungen der Erfindung sind in den Unteransprüchen offenbart oder ergeben sich aus der folgenden Beschreibung bevorzugter Ausführungsbeispiele der Erfindung.

Die Erfindung betrifft eine insbesondere landwirtschaftliche Bodenbearbeitungsmaschine (z. B. eine Hacke, einen Striegel, einen Hackstriegel oder dergleichen), vorzugsweise zur gleichzeitigen, z. B. mechanischen Bodenbearbeitung, und Verteilung von z. B. granularem (z. B. körnigem) und/oder festem Verteilgut (z. B. Dünger und/oder Saatgut).

Die Bodenbearbeitungsmaschine umfasst ein Zinkenfeld mit einer Vielzahl an Zinken, insbesondere Striegelzinken und/oder Federzinken.

Das Zinkenfeld umfasst ein Zinken-Mittelteil und zumindest zwei Zinken-Seitenteile, vorzugsweise jeweils zumindest ein Zinken-Seitenteil zweckmäßig links und rechts vom Zinken-Mittelteil.

Die Zinken-Seitenteile können, vorzugsweise relativ zum Zinken-Mittelteil, z. B. in eine Transportstellung zweckmäßig nach oben schwenkbar sein, z. B. um zumindest 80°, vorzugsweise um im Wesentlichen 90°.

Die Bodenbearbeitungsmaschine umfasst zumindest eine Verteilervorrichtung, vorzugsweise zumindest einen Verteilerturm (z. B. mit Steigrohr und/oder Verteilerkopf oder Verteilerring mit einer Vielzahl an Abgängen), zum Aufteilen von Verteilgut an eine Vielzahl an Ausbringelemente zum Verteilen des Verteilguts. Die Bodenbearbeitungsmaschine kann aber auch z. B. eine Vielzahl an Verteilervorrichtungen (z. B. Verteilertürme (z. B. jeweils mit Steigrohr und/oder Verteilerkopf oder Verteilerring mit einer Vielzahl an Abgängen)) zum Aufteilen von Verteilgut an eine Vielzahl an Ausbringelemente zum Verteilen des Verteilguts umfassen.

Eine Besonderheit der Bodenbearbeitungsmaschine ist, dass zumindest eine Verteilervorrichtung (vorzugsweise in Arbeitsrichtung der Bodenbearbeitungsmaschine) vor dem Zinkenfeld positioniert ist und/oder zumindest eine Verteilervorrichtung (vorzugsweise in Arbeitsrichtung der Bodenbearbeitungsmaschine) hinter dem Zinkenfeld positioniert ist.

Die zumindest eine Verteilervorrichtung ist somit vorzugsweise außerhalb des Bereichs des Zinkenfelds positioniert.

Das Zinkenfeld umfasst ein Zinken-Mittelteil und mittels (z. B. ersten) Schwenkachsen am Zinken-Mittelteil schwenkbar gelagerte Zinken-Seitenteile, vorzugsweise um die Zinken-Seitenteile in eine Transportstellung (zweckmäßig nach oben) schwenken zu können, insbesondere in eine Transportstellung mit einer gegenüber einer Arbeitsbreite der Bodenbearbeitungsmaschine reduzierten Transportbreite.

Die insbesondere ersten Schwenkachsen der Zinken-Seitenteile sind vorzugsweise im Wesentlichen parallel zueinander ausgerichtet. Alternativ oder ergänzend können die Zinken-Seitenteile mittels der ersten Schwenkachsen z. B. um zumindest 80°oder zumindest 90° nach oben geschwenkt werden, insbesondere in die Transportstellung.

Es ist möglich, dass die Zinken-Seitenteile jeweils zumindest zwei Teilabschnitte aufweisen, wobei die zumindest zwei Teilabschnitte vorzugsweise jeweils eine zweite (insbesondere eine zumindest 170°-Klappung ermöglichende, insbesondere eine zumindest und/oder im Wesentlichen 180°-Klappung ermöglichende) Schwenkachse umfassen, um zusätzlich zu den ersten Schwenkachsen um die zweiten Schwenkachsen schwenkbar zu sein.

Es ist möglich, dass die zweiten Schwenkachsen z. B. durch Hubzylinder betätigbar sind, die z. B. im Wesentlichen parallel zu und/oder innerhalb der vorderen und/oder hinteren Querbalkenkonstruktionen des Zinken-Mittelteils positioniert sein können.

Das Zinkenfeld kann somit vorzugsweise um zumindest zwei oder zumindest vier Schwenkachsen in die Transportstellung zweckmäßig nach oben geklappt werden.

Es ist möglich, dass die (z. B. zweiten) Schwenkachsen der Teilabschnitte im Wesentlichen parallel zu den (z. B. ersten) Schwenkachsen der Zinken-Seitenteile ausgerichtet sind.

Die (z. B. ersten) Schwenkachsen der Zinken-Seitenteile und/oder die (z. B. zweiten) Schwenkachsen der Teilabschnitte sind vorzugsweise im Wesentlichen parallel zur Arbeitsrichtung der Bodenbearbeitungsmaschine ausgerichtet.

Die jeweiligen Teilabschnitte der Zinken-Seitenteile können vorzugsweise um zumindest 170° (z. B. um im Wesentlichen 180°) zueinander schwenkbar und/oder zusammenklappbar sein.

Das Zinkenfeld kann somit z. B. auf jeder Seite zumindest einmal oder zumindest zweimal klappbar ausgebildet sein, zweckmäßig um das Zinkenfeld in die Transportstellung schwenken zu können.

Die Bodenbearbeitungsmaschine kann z. B. zumindest einen Vorratsbehälter zum Bereitstellen und Mitführen von Verteilgut umfassen. Der Vorratsbehälter ist vorzugsweise mittels zumindest einer Verteilgut-Versorgungsleitung mit der zumindest einen Verteilervorrichtung verbunden.

Es ist möglich, dass der Vorratsbehälter insbesondere in Arbeitsrichtung der Bodenbearbeitungsmaschine hinter oder vor dem Zinkenfeld positioniert ist, zwischen einer Kopplungseinrichtung zum Ankoppeln an ein Zugfahrzeug und dem Zinkenfeld positioniert ist, und/oder als Fronttank zur Anordnung an eine Front eines Zugfahrzeugs ausgebildet ist.

Die Ausbringelemente können z. B. im Zinkenfeld und/oder insbesondere in Arbeitsrichtung der Bodenbearbeitungsmaschine vor dem Zinkenfeld positioniert sein, vorzugsweise so, dass verteiltes Verteilgut mittels der Zinken in den Boden eingearbeitet werden kann.

Es ist möglich, dass zumindest einige der Ausbringelemente an zumindest einigen der Zinken positioniert und/oder angebaut sind.

Alternativ oder ergänzend können die Ausbringelemente z. B. jeweils ein Prallelement umfassen, vorzugsweise um das Verteilgut flächig und/oder in Form von Streufächern zu verteilen.

Es ist möglich, dass das Zinken-Mittelteil insbesondere in Arbeitsrichtung der Bodenbearbeitungsmaschine eine vordere Querbalkenkonstruktion und/oder eine hintere Querbalkenkonstruktion umfasst und vorzugsweise vorne durch die vordere Querbalkenkonstruktion und/oder hinten durch die hintere Querbalkenkonstruktion begrenzt wird.

Es ist möglich, dass zumindest eine Verteilervorrichtung insbesondere in Arbeitsrichtung der Bodenbearbeitungsmaschine vor der vorderen Querbalkenkonstruktion oder hinter der hinteren Querbalkenkonstruktion des Zinken-Mittelteils positioniert ist und/oder mittels einer Tragstruktur an das Zinken-Mittelteil angebaut ist, z. B. an die vordere Querbalkenkonstruktion oder an die hintere Querbalkenkonstruktion des Zinken-Mittelteils.

Alternativ oder ergänzend ist es möglich, dass der Vorratsbehälter insbesondere in Arbeitsrichtung der Bodenbearbeitungsmaschine vor der vorderen Querbalkenkonstruktion oder hinter der hinteren Querbalkenkonstruktion des Zinken-Mittelteils positioniert ist und/oder mittels einer Tragkonstruktion an das Zinken-Mittelteil angebaut ist, z. B. an die vordere Querbalkenkonstruktion oder an die hintere Querbalkenkonstruktion des Zinken-Mittelteils.

Die Zinken-Seitenteile können insbesondere in Arbeitsrichtung der Bodenbearbeitungsmaschine jeweils z. B. eine vordere Querbalkenkonstruktion und/oder eine hintere Querbalkenkonstruktion umfassen und vorzugsweise vorne durch die vorderen Querbalkenkonstruktionen und/oder hinten durch die hinteren Querbalkenkonstruktionen begrenzt werden.

Seitlich außen kann das Zinkenfeld beidseits durch jeweils einen Seitenbalken begrenzt werden und/oder geschlossen werden.

Die vorderen und hinteren Querbalkenkonstruktionen und die Seitenbalken können z. B. eine geschlossene und/oder umlaufende (z. B. die ersten Schwenkachsen und vorzugsweise die zweiten Schwenkachsen umfassende) Rahmenstruktur bilden.

Die vorderen Querbalkenkonstruktionen des Zinken-Mittelteils und der Zinken-Seitenteile können vorzugsweise im Wesentlichen koaxial oder parallel zueinander ausgerichtet sein. Alternativ oder ergänzend können die hinteren Querbalkenkonstruktionen des Zinken-Mittelteils und der Zinken-Seitenteile vorzugsweise im Wesentlichen koaxial oder parallel zueinander ausgerichtet sein.

Möglich ist z. B., dass jeweils eine Verteilervorrichtung insbesondere in Arbeitsrichtung der Bodenbearbeitungsmaschine vor den vorderen Querbalkenkonstruktionen oder hinter den hinteren Querbalkenkonstruktionen der Zinken-Seitenteile positioniert ist, vorzugsweise um gemeinsam mit dem jeweiligen Zinken-Seitenteil (zweckmäßig nach oben in die Transportstellung) schwenkbar zu sein. Jeweils eine Verteilervorrichtung ist an die Zinken-Seitenteile (z. B. unmittelbar oder mittelbar, vorzugsweise mittels jeweils einer Tragstruktur) angebaut (z. B. an die vorderen Querbalkenkonstruktionen oder an die hinteren Querbalkenkonstruktionen der Zinken-Seitenteile), vorzugsweise um gemeinsam mit dem jeweiligen Zinken-Seitenteil (zweckmäßig nach oben in die Transportstellung) schwenkbar zu sein.

Die Verteilervorrichtungen an den Zinken-Seitenteilen können z. B. einen im Wesentlichen gleichen oder unterschiedlichen Seitenabstand zur Mittelachse der Bodenbearbeitungsmaschine aufweisen und/oder insbesondere in Arbeitsrichtung der Bodenbearbeitungsmaschine versetzt zueinander positioniert sein, z. B. um beim Schwenken der Zinken-Seitenteile (zweckmäßig nach oben in die Transportstellung) nicht miteinander zu kollidieren.

Es ist möglich, dass die zumindest eine Verteilervorrichtung mittels zumindest einer Verteilgut-Versorgungsleitung mit dem Vorratsbehälter verbunden ist, wobei vorzugsweise die zumindest eine Verteilgut-Versorgungsleitung (insbesondere im Wesentlichen ausschließlich) vor dem Zinkenfeld oder hinter dem Zinkenfeld verläuft und/oder nicht über das Zinkenfeld verläuft. Die zumindest eine Verteilgut-Versorgungsleitung ist somit vorzugsweise nicht über das Zinkenfeld verlegt, sondern verläuft vorteilhaft im Wesentlichen ausschließlich außerhalb des Zinkenfelds.

Alternativ oder ergänzend kann die zumindest eine Verteilervorrichtung z. B. mittels Verteilgutleitungen mit den Ausbringelementen verbunden sein, wobei vorzugsweise die Verteilgutleitungen (insbesondere im Wesentlichen ausschließlich) vor dem Zinkenfeld oder hinter dem Zinkenfeld verlaufen und/oder nicht über das Zinkenfeld verlaufen. Die Verteilgutleitungen sind somit vorzugsweise nicht über das Zinkenfeld verlegt sind, sondern verlaufen vorteilhaft im Wesentlichen ausschließlich außerhalb des Zinkenfelds.

Es ist möglich, dass die Bodenbearbeitungsmaschine (vorzugsweise motorisierte und/oder Aktor-betätigbare (z. B. Hydraulik-Kolben-betätigbare)) Betätigungseinrichtungen umfasst, die eingerichtet sind, um insbesondere zum Verändern einer Zinken-Arbeitstiefe einzelne Zinkenfeldabschnitte des Zinkenfelds und/oder einzelne Zinken (vorzugsweise unabhängig voneinander) zu schwenken und/oder anzuheben oder abzusenken.

Es ist möglich, dass einem ersten Zinkenfeldabschnitt und/oder zumindest einem zweiten Zinkenfeldabschnitt zumindest eine Erfassungseinrichtung zur Erfassung einer oder mehrerer Stellgrößen für eine oder mehrere der Betätigungseinrichtungen zugeordnet ist.

Die zumindest eine Erfassungseinrichtung kann z. B. dazu eingerichtet sein, mittelbar oder unmittelbar als Stellgröße zumindest eines von folgendem zu erfassen:
- eine Arbeitstiefe von zumindest einem Zinken,
- eine Vorspannkraft von zumindest einem Zinken,
- eine Beschleunigung von zumindest einem Zinken,
- eine Winkellage von zumindest einem Zinken,
- eine Lage des Zinken-Mittelteils und/oder der Zinken-Seitenteile im Raum oder allgemein der Bodenbearbeitungsmaschine, und/oder
- eine Fahrgeschwindigkeit und/oder eine Beschleunigung des Zinken-Mittelteils, der Zinken-Seitenteile und/oder der Bodenbearbeitungsmaschine.

Es ist möglich, dass die Bodenbearbeitungsmaschine eine (vorzugsweise motorisierte und/oder Aktor-betätigbare (z. B. Hydraulik-Kolben-betätigbare)) Höhenverstellungsvorrichtung aufweist, um insbesondere zum Verändern einer Zinken-Arbeitstiefe eine Höhe des Zinkenfelds zu verstellen, vorzugsweise mittels Stützrädern der Bodenbearbeitungsmaschine.

Es ist möglich, dass eine elektronische Steuerungseinrichtung zur Verfügung gestellt ist, um die Betätigungseinrichtungen und/oder die Höhenverstellungsvorrichtung anzusteuern, insbesondere zum Verändern der Arbeitstiefe.

Insbesondere in Arbeitsstellung der Bodenbearbeitungsmaschine kann das Zinkenfeld vorzugsweise als das Zinkenfeld definiert sein, welches zwischen den vorderen Querbalkenkonstruktionen des Zinken-Mittelteils und der Zinken-Seitenteile und den hinteren Querbalkenkonstruktionen des Zinken-Mittelteils und der Zinken-Seitenteile positioniert ist.

Die Zinken sind vorzugsweise Striegelzinken und/oder Federzinken.

Es ist möglich, dass das Zinkenfeld eine Vielzahl insbesondere in Arbeitsrichtung der Bodenbearbeitungsmaschine hintereinander angeordnete (z. B. quer zueinander versetzte) Zinkenreihen umfasst, z. B. zumindest drei, zumindest vier, zumindest fünf oder zumindest sechs Zinkenreihen. Die Zinkenreihen können z. B. einen Abstand in Arbeitsrichtung der Bodenbearbeitungsmaschine zweckmäßig von kleiner 35cm, kleiner 30cm, kleiner 25cm oder kleiner 20cm aufweisen.

Die Zinken können z. B. einen Strichabstand im Wesentlichen orthogonal zur Arbeitsrichtung der Bodenbearbeitungsmaschine vorzugsweise von kleiner 12,5cm, kleiner 10cm, kleiner 7,5cm oder kleiner 5cm aufweisen.

Die Bodenbearbeitungsmaschine kann z. B. als Anbaugerät insbesondere zum Verbinden mit einem Zugfahrzeug ausgebildet sein und/oder eine Kopplungseinrichtung, vorzugsweise einen 3-Punkt-Kraftheber (z. B. 3-Punkt-Hydraulik-Kraftheber), zum Ankoppeln an ein Zugfahrzeug umfassen. Das Zugfahrzeug kann z. B. ein Traktor, Schlepper etc. sein.

Die Bodenbearbeitungsmaschine und/oder das Zinkenfeld kann z. B. eine Arbeitsbreite von zumindest 5m, zumindest 8m, zumindest 11m oder zumindest 15m aufweisen.

Zu erwähnen ist, dass die Transportstellung (zweckmäßig der Bodenbearbeitungsmaschine und/oder des Zinkenfelds) eine relativ zur Arbeitsbreite (zweckmäßig der Bodenbearbeitungsmaschine und/oder des Zinkenfelds) reduzierte Transportbreite aufweist.

Die Transportbreite ist vorzugsweise kleiner als 4m oder kleiner als 3,5m, z. B. maximal im Wesentlichen 3m.

Die zumindest eine Verteilervorrichtung kann vorzugsweise einen Verteilerturm umfassen, vorzugsweise mit Steigrohr und/oder einem Verteilerkopf oder Verteilerring mit einer Vielzahl an Abgängen zum Aufteilen von Verteilgut an die Ausbringelemente.

Die Arbeitsrichtung der Bodenbearbeitungsmaschine entspricht insbesondere der Zugrichtung und/oder der Vorwärtsfahrtrichtung der Bodenbearbeitungsmaschine.

Der oder die Querbalkenkonstruktionen sind vorzugsweise im Wesentlichen rechtwinklig zur Arbeitsrichtung der Bodenbearbeitungsmaschine ausgerichtet.

Die Zinken des Zinkenfelds können an einer oder mehreren (z. B. gitterförmigen) Rahmenkonstruktionen gelagert sein, z. B. schwenkbar und/oder höhenverstellbar.

Zumindest eine Rahmenkonstruktion kann z. B. dem Zinken-Mittelteil zugeordnet sein und/oder jeweils zumindest eine Rahmenkonstruktion kann den Zinken-Seitenteilen zugeordnet sein.

Es ist möglich, dass die Zinken des Zinkenfelds z. B. schwenkbar und/oder höhenverstellbar gelagert sind, z. B. an der Rahmenkonstruktion des Zinken-Mittelteils und/oder an der jeweiligen Rahmenkonstruktion der Zinken-Seitenteile. Hierfür können z. B. Balken verschwenkt werden und/oder Zinken und/oder Zinkenfeldabschnitte gegenüber den Balken verschwenkt werden.

Es ist möglich, dass zumindest eine Verteilervorrichtung und/oder der Vorratsbehälter (insbesondere in Arbeitsrichtung der Bodenbearbeitungsmaschine) z. B. abschnittsweise oder vollständig vor oder hinter dem Zinkenfeld positioniert ist.

Möglich ist z. B. dass die zumindest eine Verteilervorrichtung und/oder der Vorratsbehälter (zweckmäßig abschnittsweise oder insgesamt) außerhalb des Zinkenfelds positioniert ist, vorzugsweise so, dass die zumindest eine Verteilervorrichtung und/oder der Vorratsbehälter sich nicht in einen Bereich über dem Zinkenfeld hinein erstreckt.

Eine Dosierung des Verteilguts kann z. B. mittels einer oder mehreren Dosiervorrichtungen insbesondere in Form zumindest einer Zellenradschleuse erfolgen, wobei die zumindest eine Zellenradschleuse z. B. unter dem Vorratsbehälter positioniert sein kann.

Beispielsweise kann jeder Verteilervorrichtung z. B. eine separate und/oder eigene Dosiervorrichtung (z. B. Zellenrotor) zugeordnet sein kann, um vorteilhaft ein voneinander unabhängiges Dosieren für die Verteilervorrichtungen zu ermöglichen.

Das Verteilgut kann vorzugsweise vom Vorratsbehälter zu der zumindest einen Verteilervorrichtung und/oder von der zumindest einen Verteilervorrichtung zu den Ausbringelementen pneumatisch gefördert werden.

Die jeweiligen Querbalkenkonstruktionen des Zinken-Mittelteils und/oder der Zinken-Seitenteile können zweckmäßig einteilig oder mehrteilig ausgebildet sein, z. B. aus einem oder mehreren Trägern wie z. B. Hohlprofilträgern.

Die zuvor beschriebenen bevorzugten Ausführungsbeispiele und Merkmale der Erfindung sind miteinander kombinierbar. Vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Figur 1: zeigt eine perspektivische Ansicht einer Bodenbearbeitungsmaschine gemäß einem Ausführungsbeispiel der Erfindung, insbesondere in Arbeitsstellung,
- Figur 2: zeigt einen vergrößerten Teilbereich der Figur 1,
- Figur 3: zeigt eine Draufsicht von oben auf die Bodenbearbeitungsmaschine,
- Figur 4: zeigt einen vergrößerten Teilbereich der Figur 3,
- Figur 5: zeigt eine Seitenansicht der Bodenbearbeitungsmaschine,
- Figur 6: zeigt einen vergrößerten Teilbereich der Figur 5,
- Figur 7: zeigt eine perspektivische Detailansicht der Bodenbearbeitungsmaschine,
- Figur 8: zeigt die Bodenbearbeitungsmaschine in Transportstellung, und
- Figur 9: zeigt einen vergrößerten Teilbereich der Figur 8,
- Figur 10: zeigt eine stark schematische Ansicht von vorne auf ein Zinkenfeld für eine Bodenbearbeitungsmaschine gemäß einem Ausführungsbeispiel der Erfindung,
- Figur 11: zeigt eine stark schematische Ansicht von oben auf ein Zinkenfeld für eine Bodenbearbeitungsmaschine gemäß einem Ausführungsbeispiel der Erfindung, und
- Figur 12: zeigt eine perspektivische Ansicht einer Bodenbearbeitungsmaschine gemäß einem anderen Ausführungsbeispiel der Erfindung, insbesondere in Arbeitsstellung.

Die unter Bezugnahme auf die Figuren beschriebenen bevorzugten Ausführungsbeispiele der Erfindung stimmen teilweise überein, wobei ähnliche oder identische Teile mit den gleichen Bezugszeichen versehen sind und zu deren Erläuterung auch auf die Beschreibung der anderen Ausführungsbeispiele verwiesen werden kann. In den Figuren sind zu Darstellungszwecken nicht immer alle Teile mit Bezugszeichen versehen.

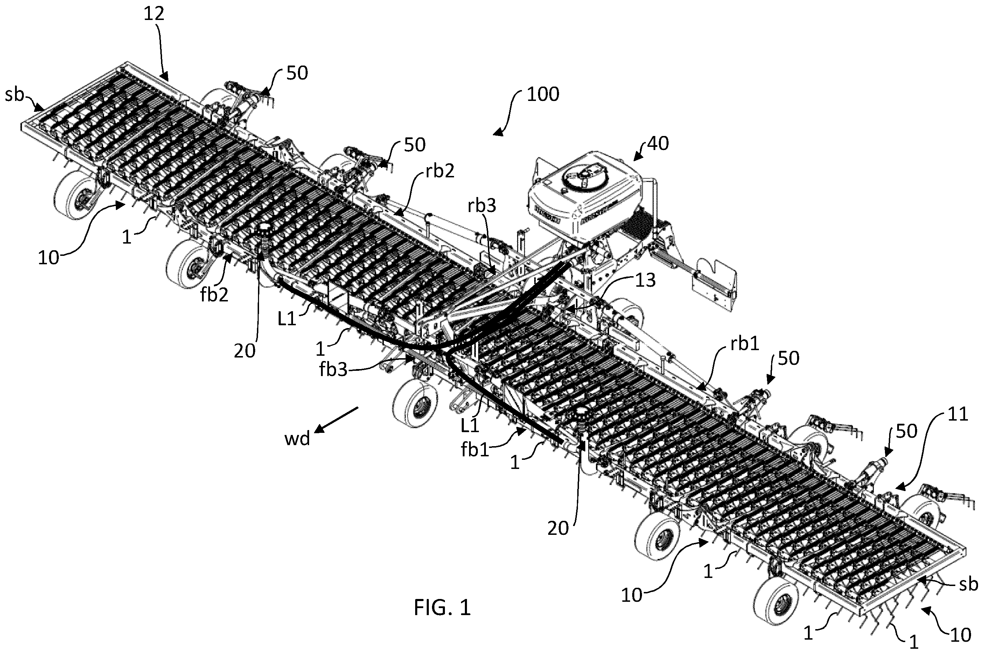

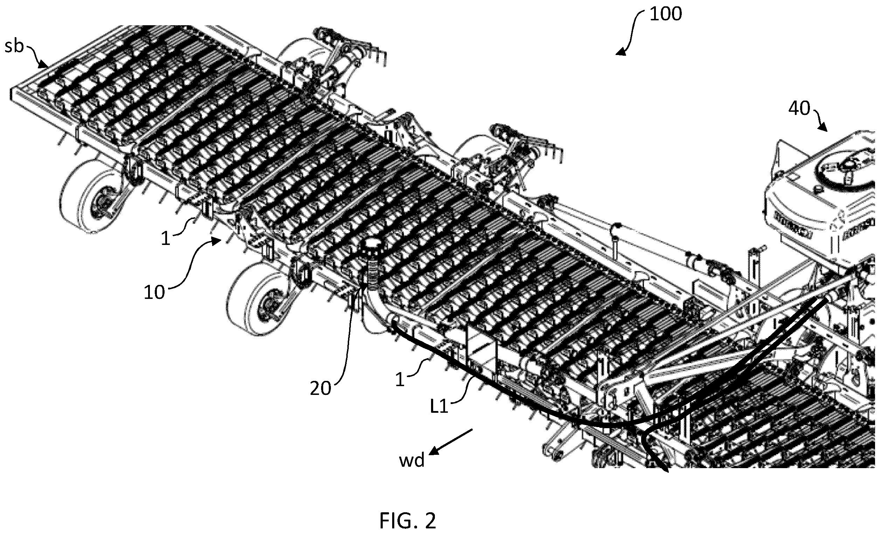

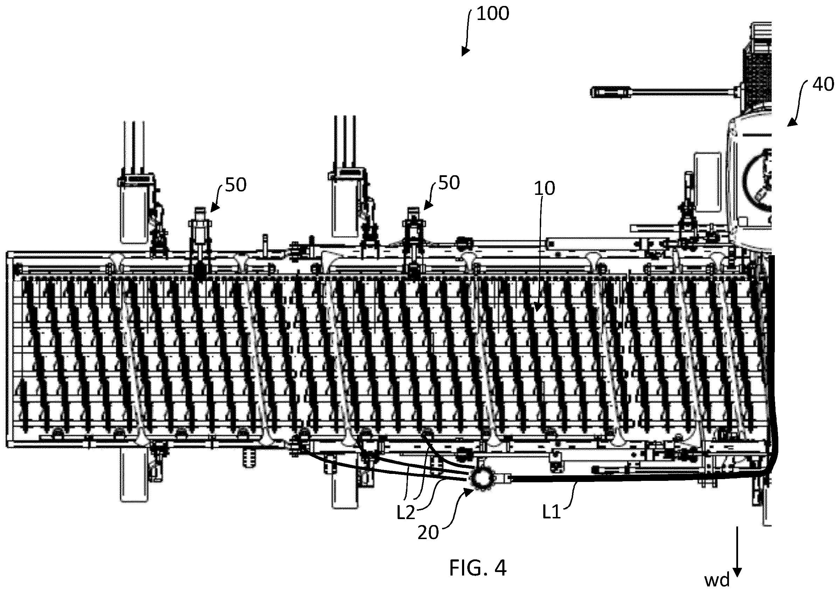

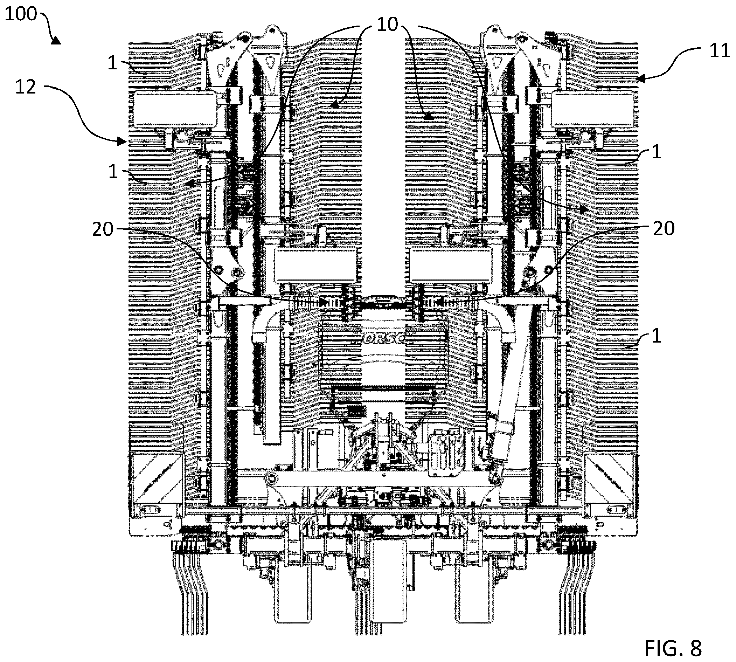

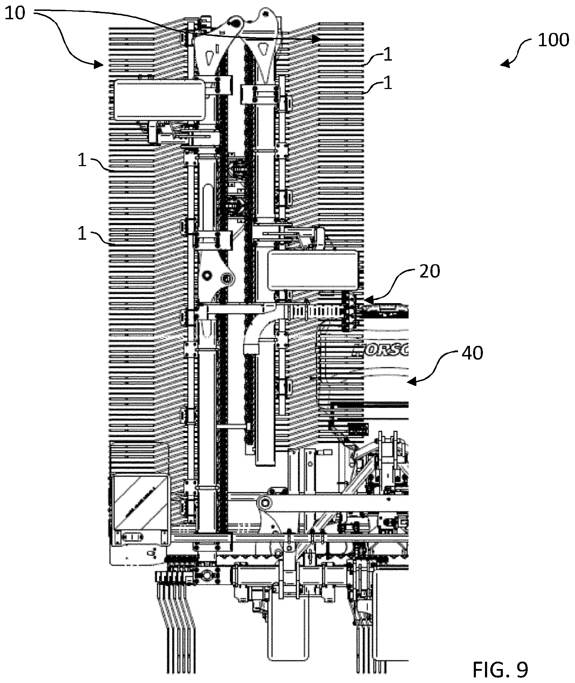

Die Figuren 1 bis 9 zeigen unterschiedliche Ansichten einer Bodenbearbeitungsmaschine 100 in Form eines Hackstriegels gemäß einem Ausführungsbeispiel der Erfindung. Die Figuren 1 bis 6 zeigen die Bodenbearbeitungsmaschine 100 in Arbeitsstellung und die Figuren 8 und 9 zeigen die Bodenbearbeitungsmaschine 100 in Transportstellung.

Die Bodenbearbeitungsmaschine 100 dient vorzugsweise zur zeitgleichen Bodenbearbeitung (insbesondere mechanischen Unkrautbekämpfung) und Verteilung von (insbesondere granularem und/oder festem) Verteilgut.

Die Bodenbearbeitungsmaschine 100 umfasst ein Zinkenfeld 10 mit einer Vielzahl an Zinken 1 (z. B. Striegelzinken) und vorzugsweise zumindest zwei Verteilervorrichtungen 20 in Form von beispielhaft zwei Verteilertürmen mit jeweils einem Steigrohr und einem Verteilerkopf oder Verteilerring mit einer Vielzahl an Abgängen zum Aufteilen von Verteilgut an eine Vielzahl an Ausbringelemente 30 zum Verteilen des Verteilguts. Ebenfalls ist ein Vorratsbehälter 40 zum Mitführen und Bereitstellen von Verteilgut an die Verteilervorrichtungen 20 und somit an die Ausbringelemente 30 zur Verfügung gestellt, wobei eine Förderung des Verteilguts zweckmäßig pneumatisch erfolgt.

Eine Besonderheit ist, dass die Verteilervorrichtungen 20, insbesondere in Arbeitsrichtung wd der Bodenbearbeitungsmaschine 100, vor dem Zinkenfeld 10 positioniert sind. Es sind aber auch Ausführungsbeispiele möglich, bei denen zumindest eine Verteilervorrichtung 20 in Arbeitsrichtung wd der Bodenbearbeitungsmaschine 100 hinter dem Zinkenfeld 10 positioniert ist, oder bei denen zumindest eine Verteilervorrichtung 20 in Arbeitsrichtung wd der Bodenbearbeitungsmaschine 100 vor dem Zinkenfeld 10 positioniert ist und zumindest eine Verteilervorrichtung 20 in Arbeitsrichtung wd der Bodenbearbeitungsmaschine 100 hinter dem Zinkenfeld 10 positioniert ist.

Der Vorratsbehälter 40 ist vorzugsweise ebenfalls außerhalb des Zinkenfelds 10 positioniert und zwar vorzugsweise in Arbeitsrichtung wd der Bodenbearbeitungsmaschine 100 hinter dem Zinkenfeld 10. Es sind aber auch Ausführungsbeispiele möglich, bei denen der Vorratsbehälter 40 in Arbeitsrichtung wd der Bodenbearbeitungsmaschine 100 vor dem Zinkenfeld 10 positioniert ist.

Bei einem bevorzugten Ausführungsbeispiel können z. B. zumindest eine Verteilervorrichtung 20 und der Vorratsbehälter 40 gemeinsam vor oder hinter dem Zinkenfeld 10 positioniert sein.

Die Verteilervorrichtungen 20 sind zweckmäßig eingangsseitig mittels Verteilgut-Versorgungsleitungen L1 mit dem Vorratsbehälter 40 verbunden und zweckmäßig ausgangsseitig mittels Verteilgutleitungen L2 mit den Ausbringelementen 30 verbunden.

Die Ausbringelemente 30 können z. B. im Zinkenfeld 10 und/oder vorzugsweise in Arbeitsrichtung wd der Bodenbearbeitungsmaschine 100 vor dem Zinkenfeld 10 positioniert sein, vorzugsweise so, dass verteiltes Verteilgut mittels der Zinken 1 in den Boden eingearbeitet werden kann.

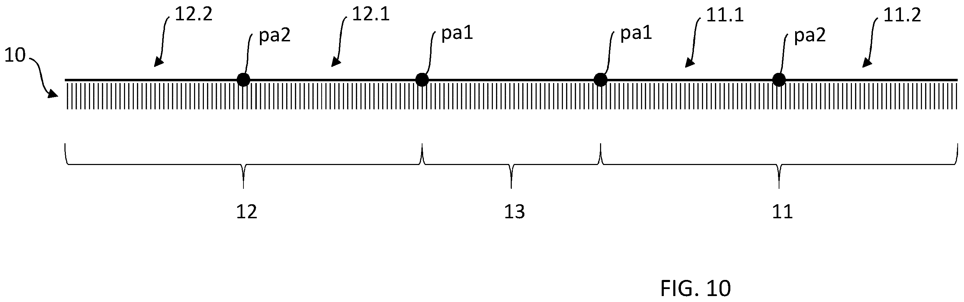

Das Zinkenfeld 10 umfasst ein Zinken-Mittelteil 13 und mittels ersten Schwenkachsen am Zinken-Mittelteil 13 schwenkbar gelagerte Zinken-Seitenteile 11, 12, vorzugsweise um die Zinken-Seitenteile 11, 12 in die Transportstellung nach oben schwenken zu können. Ein möglicher Schwenkmechanismus ist unter Bezugnahme auf die Figur 10 weiter unten erläutert.

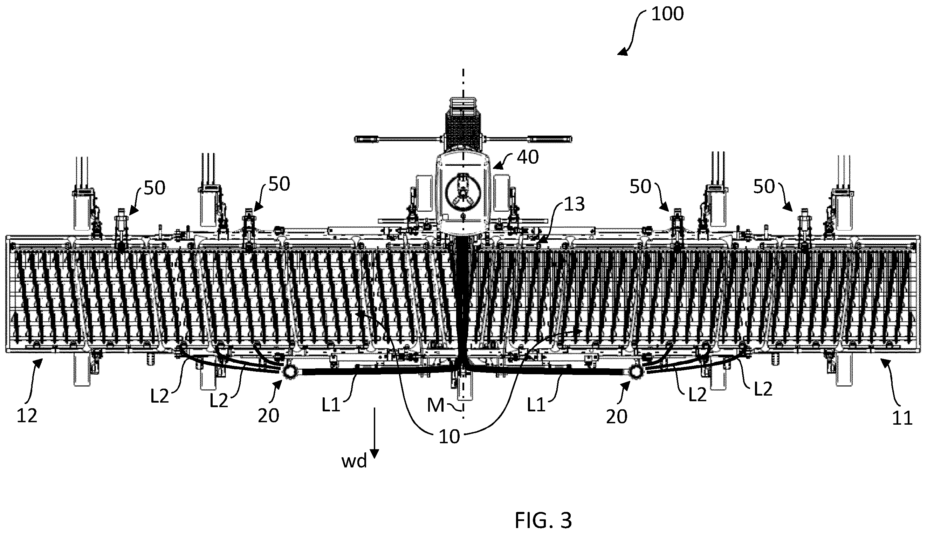

Die Verteilervorrichtungen 20 an den Zinken-Seitenteilen 11, 12 weisen vorzugsweise einen im Wesentlichen gleichen Seitenabstand zur Mittelachse M (Figur 3) der Bodenbearbeitungsmaschine 100 auf. Es sind aber auch Ausführungsbeispiele möglich, bei denen die Verteilervorrichtungen 20 an den Zinken-Seitenteilen 11, 12 einen unterschiedlichen Seitenabstand zur Mittelachse M der Bodenbearbeitungsmaschine 100 aufweisen und/oder in Arbeitsrichtung wd der Bodenbearbeitungsmaschine 100 versetzt zueinander positioniert sind, vorzugsweise um beim Schwenken der Zinken-Seitenteile 11, 12 in die Transportstellung nicht miteinander zu kollidieren, sondern z. B. aneinander vorbei bewegt zu werden.

Das Zinken-Mittelteil 13 umfasst insbesondere in Arbeitsrichtung wd der Bodenbearbeitungsmaschine 100 eine vordere Querbalkenkonstruktion fb3 und eine hintere Querbalkenkonstruktion rb3 und wird vorzugsweise vorne durch die vordere Querbalkenkonstruktion fb3 und hinten durch die hintere Querbalkenkonstruktion rb3 begrenzt.

Auch das Zinken-Mittelteil 13, insbesondere dessen Querbalkenkonstruktionen fb3, rb3, kann zweckmäßig zum Anbau zumindest einer Verteilervorrichtung 20 und/oder des Vorratsbehälters 40 genutzt werden.

Die Zinken-Seitenteile 11, 12 umfassen jeweils insbesondere in Arbeitsrichtung wd der Bodenbearbeitungsmaschine 100 eine vordere Querbalkenkonstruktion fb1, fb2 und eine hintere Querbalkenkonstruktion rb1, rb2 und werden vorzugsweise vorne durch die vorderen Querbalkenkonstruktionen fb1, fb2 und hinten durch die hinteren Querbalkenkonstruktionen rb1, rb2 begrenzt. Seitlich außen kann das Zinkenfeld 10 beidseits durch jeweils einen Seitenbalken sb begrenzt werden.

Es ist im Kontext der Erfindung möglich, dass die Bodenbearbeitungsmaschine 100 z. B. auch außerhalb des Zinkenfelds 10 Zinken umfasst.

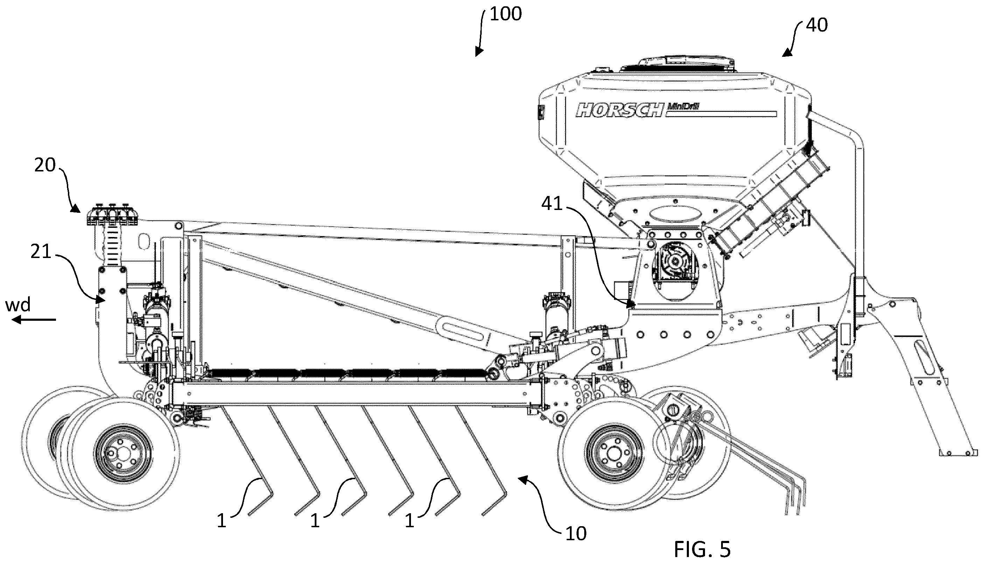

Im gezeigten Ausführungsbeispiel ist der Vorratsbehälter 40 hinter der hinteren Querbalkenkonstruktion rb3 des Zinken-Mittelteils 13 positioniert und z. B. mittels einer Tragkonstruktion 41 (Figur 5) an das Zinken-Mittelteil 13 angebaut, z. B. an die hintere Querbalkenkonstruktion rb3 des Zinken-Mittelteils 13.

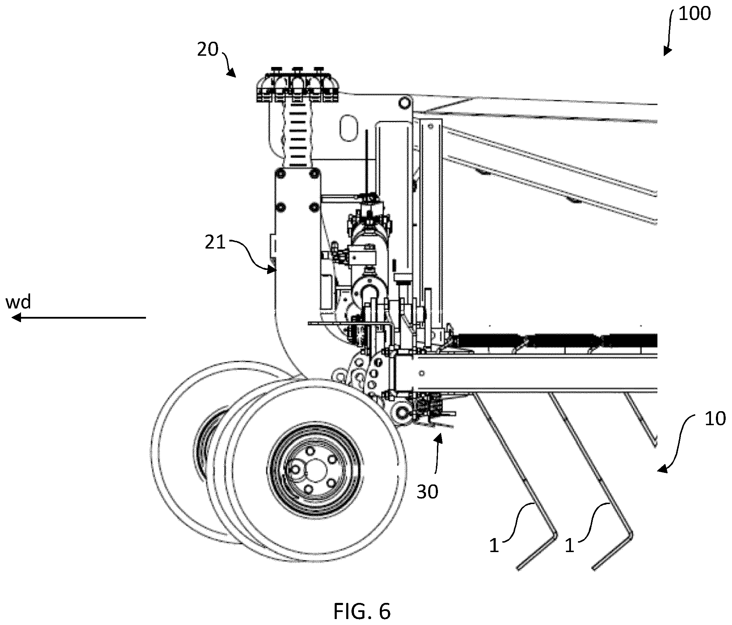

Im gezeigten Ausführungsbeispiel ist jeweils eine Verteilervorrichtung 20 vor den vorderen Querbalkenkonstruktionen fb1, fb2 der Zinken-Seitenteile 11, 12 positioniert und z. B. mittels einer jeweiligen Tragstruktur 21 (Figuren 5 und 6) an die Zinken-Seitenteile 11, 12 angebaut, z. B. an die vorderen Querbalkenkonstruktionen fb1, fb2 der Zinken-Seitenteile 11, 12.

Im gezeigten Ausführungsbeispiel sind die Verteilervorrichtungen 20 gemeinsam mit dem jeweiligen Zinken-Seitenteil 11, 12 in die Transportstellung schwenkbar.

Es sind aber wie schon erwähnt auch Ausführungsbeispiele möglich, bei denen zumindest eine Verteilervorrichtung 20 und ein Vorratsbehälter 40 insbesondere in Arbeitsrichtung wd der Bodenbearbeitungsmaschine 100 vor dem Zinkenfeld 10 oder hinter dem Zinkenfeld 10 positioniert sind, sodass die Verteilgut-Versorgungsleitung(en) L1 und/oder die Verteilgutleitungen L2 vorzugsweise im Wesentlichen ausschließlich vor oder hinter dem Zinkenfeld 10 verlaufen können.

Es ist möglich, dass die Bodenbearbeitungsmaschine 100 (vorzugsweise motorisierte und/oder Aktor-betätigbare (z. B. Hydraulik-Kolben-betätigbare)) Betätigungseinrichtungen 50 umfasst, um insbesondere zum Verändern einer Zinken-Arbeitstiefe einzelne Zinkenfeldabschnitte des Zinkenfelds 10 und/oder einzelne Zinken 1 zu schwenken und/oder anzuheben oder abzusenken.

Die Bodenbearbeitungsmaschine 100 kann z. B. eine (vorzugsweise motorisierte und/oder Aktor-betätigbare (z. B. Hydraulik-Kolben-betätigbare)) Höhenverstellungsvorrichtung umfassen, um insbesondere zum Verändern einer Zinken-Arbeitstiefe eine Höhe des Zinkenfelds 10 zu verstellen, vorzugsweise mittels Stützrädern der Bodenbearbeitungsmaschine 100.

Eine elektronische Steuerungseinrichtung kann zweckmäßig zur Verfügung gestellt sein, um die Betätigungseinrichtungen 50 und/oder die Höhenverstellungsvorrichtung anzusteuern, insbesondere zum Verändern der Zinken-Arbeitstiefe.

Das Zinkenfeld 10 ist, insbesondere in Arbeitsstellung der Bodenbearbeitungsmaschine 100, definiert als das Zinkenfeld 10, das zwischen den vorderen Querbalkenkonstruktionen fb3, f1, fb2 des Zinken-Mittelteils 13 und der Zinken-Seitenteile 11, 12 und den hinteren Querbalkenkonstruktionen rb3, rb1, rb2 des Zinken-Mittelteils 13 und der Zinken-Seitenteile 11, 12 ausgebildet ist. Es ist aber z. B. möglich, dass die Bodenbearbeitungsmaschine 100 auch außerhalb des Zinkenfelds 10 Zinken umfasst.

Im gezeigten Ausführungsbeispiel umfasst die Bodenbearbeitungsmaschine 100 beispielhaft zwei Verteilervorrichtungen 20. Es sind aber auch Ausführungsbeispiele möglich, bei denen die Bodenbearbeitungsmaschine 100 z. B. nur eine Verteilervorrichtung 20 oder mehr als zwei Verteilervorrichtungen 20 umfasst. Auch sind Ausführungsbeispiele mit zumindest zwei Vorratsbehältern 40 möglich.

Im gezeigten Ausführungsbeispiel sind sowohl die Verteilervorrichtungen 20 als auch der Vorratsbehälter 40 außerhalb des Zinkenfelds 10 positioniert, so dass weder die Verteilervorrichtungen 20 noch der Vorratsbehälter 40 sich in einen Bereich über dem Zinkenfeld 10 hinein erstrecken.

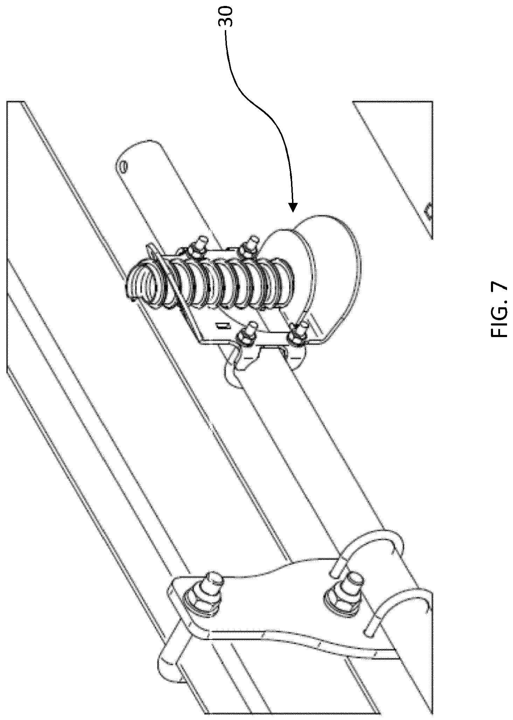

Figur 7 zeigt eine perspektivische Detailansicht der Bodenbearbeitungsmaschine 100, insbesondere eines Ausbringelements 30 mit Prallelement (z. B. einem Prallteller), wobei mittels des Prallelements Verteilgut flächig und/oder in Form eines Streufächers verteilt werden kann.

Figur 10 zeigt eine stark schematische Ansicht von vorne auf ein Zinkenfeld 10 für eine Bodenbearbeitungsmaschine 100 gemäß einem Ausführungsbeispiel der Erfindung, insbesondere zur Erläuterung eines Schwenkmechanismus, um die Bodenbearbeitungsmaschine 100 in eine Transportstellung schwenken zu können.

Ein Zinkenfeld 10 umfasst ein Zinken-Mittelteil 13 und mittels ersten Schwenkachsen pa1 am Zinken-Mittelteil 13 (z. B. um zumindest 80°, vorzugsweise im Wesentlichen 90°) schwenkbar gelagerte Zinken-Seitenteile 11, 12, um die Zinken-Seitenteile 11, 12 zweckmäßig nach oben in die Transportstellung schwenken zu können.

Optional können die Zinken-Seitenteile 11, 12 jeweils zumindest zwei Teilabschnitte 11.1, 11.2, 12.1, 12.2 umfassen.

Die zumindest zwei Teilabschnitte 11.1, 11.2, 12.1, 12.2 können jeweils eine zweite Schwenkachse pa2 umfassen, wodurch vorteilhaft die jeweiligen Zinken-Seitenteile 11, 12 (z. B. um zumindest 170°, vorzugsweise im Wesentlichen 180°) zusammengeklappt werden können.

Folglich können die Zinken-Seitenteile 11, 12 vorzugsweise aus jeweils zwei Teilabschnitten 11.1, 11.2, 12.1, 12.2 zusammengesetzt sein, wobei die zwei Teilabschnitte 11.1, 11.2, 12.1, 12.2 vorzugsweise um zumindest 170°, vorzugsweise im Wesentlichen 180°, zueinander verschwenkbar sein können.

Die Schwenkachsen pa2 und die Schwenkachsen pa1 und z.B. die Arbeitsrichtung wd der Bodenbearbeitungsmaschine 100 sind vorzugsweise im Wesentlichen parallel zueinander ausgerichtet.

Das Zinkenfeld 10 kann somit vorzugsweise um zumindest zwei Schwenkachse pa1 oder zumindest vier Schwenkachsen pa1, pa2 in die Transportstellung zweckmäßig nach oben geklappt werden.

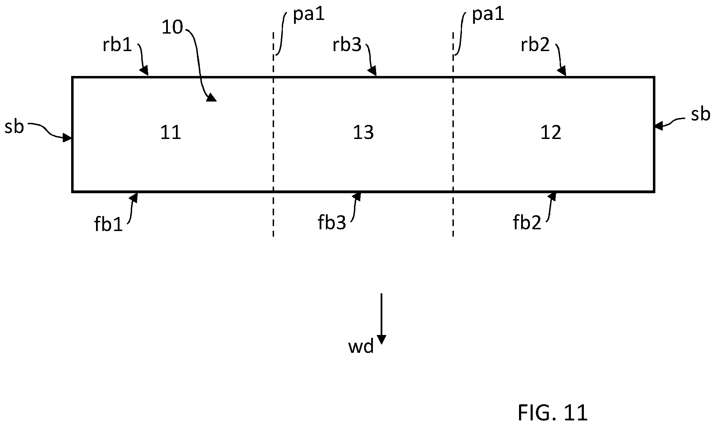

Figur 11 zeigt eine stark schematische Ansicht von oben auf ein Zinkenfeld 10 für eine Bodenbearbeitungsmaschine 100 gemäß einem Ausführungsbeispiel der Erfindung.

Figur 11 illustriert zusätzlich zu Schwenkachsen pa1 insbesondere eine vordere Querbalkenkonstruktion fb1 eines Zinken-Seitenteils 11, eine vordere Querbalkenkonstruktion fb2 eines Zinken-Seitenteils 12 und eine vordere Querbalkenkonstruktion fb3 eines Zinken-Mittelteils 13. Ebenfalls illustriert Figur 11 insbesondere eine hintere Querbalkenkonstruktion rb1 des Zinken-Seitenteils 11, eine hintere Querbalkenkonstruktion rb2 des Zinken-Seitenteils 12 und eine hintere Querbalkenkonstruktion rb3 des Zinken-Mittelteils 13. Das Zinkenfeld 10 wird (zweckmäßig in Arbeitsrichtung wd und/oder in Arbeitsstellung der Bodenbearbeitungsmaschine 100) z. B. durch die Querbalkenkonstruktionen fb1, fb2, fb3, rb1, rb2, rb3 begrenzt und/oder definiert.

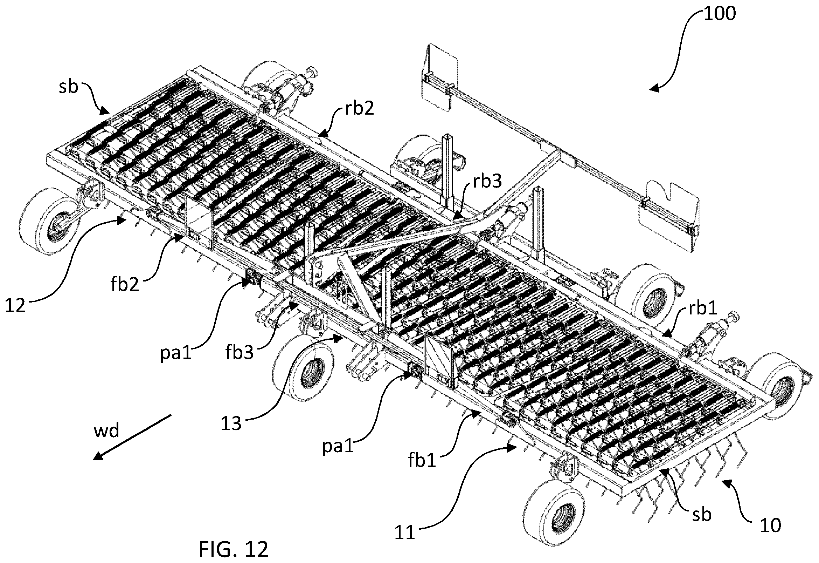

Figur 12 zeigt eine perspektivische Ansicht einer Bodenbearbeitungsmaschine 100 gemäß einem anderen Ausführungsbeispiel der Erfindung, insbesondere in Arbeitsstellung, jedoch insbesondere ohne Verteilervorrichtung 20 und ohne Vorratsbehälter 40, die aber wie hierin offenbart an der Bodenbearbeitungsmaschine 100 positioniert sein können.

Im Kontext der Erfindung sind z. B. folgende Anordnungsvarianten möglich (wobei in Arbeitsrichtung wd der Bodenbearbeitungsmaschine 100 sinngemäß links vorne und rechts hinten ist):
1. Fronttank -Zugfahrzeug - zumindest eine Verteilervorrichtung - Zinkenfeld
2. Fronttank -Zugfahrzeug - Zinkenfeld -zumindest eine Verteilervorrichtung
3. Zugfahrzeug -Vorratsbehälter und zumindest eine Verteilervorrichtung - Zinkenfeld
4. Zugfahrzeug - Vorratsbehälter - Zinkenfeld - zumindest eine Verteilervorrichtung
5. Zugfahrzeug - zumindest eine Verteilervorrichtung - Zinkenfeld - Vorratsbehälter
6. Zugfahrzeug - Zinkenfeld -Vorratsbehälter und zumindest eine Verteilervorrichtung

Die Erfindung ist nicht auf die oben beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und in den Schutzbereich der Ansprüche fallen. Darüber hinaus beansprucht die Erfindung auch Schutz für den Gegenstand und die Merkmale der Unteransprüche.

### Bezugszeichenliste

- 1: Zinken
- 10: Zinkenfeld
- 11: Zinken-Seitenteil, vorzugsweise schwenkbar
- 11.1: Teilabschnitt, vorzugsweise schwenkbar
- 11.2: Teilabschnitt, vorzugsweise schwenkbar
- 12: Zinken-Seitenteil, vorzugsweise schwenkbar
- 12.1: Teilabschnitt, vorzugsweise schwenkbar
- 12.2: Teilabschnitt, vorzugsweise schwenkbar
- pa1: Schwenkachsen
- pa2: Schwenkachsen
- 13: Zinken-Mittelteil
- fb1: vordere Querbalkenkonstruktion für Zinken-Seitenteil 11
- fb2: vordere Querbalkenkonstruktion für Zinken-Seitenteil 12
- fb3: vordere Querbalkenkonstruktion für Zinken-Mittelteil 13
- fr1: hintere Querbalkenkonstruktion für Zinken-Seitenteil 11
- fr2: hintere Querbalkenkonstruktion für Zinken-Seitenteil 12
- fr3: hintere Querbalkenkonstruktion für Zinken-Mittelteil 13
- sb: Äußerer Seitenbalken
- 20: Verteilervorrichtung, vorzugsweise Verteilerturm
- 21: Tragstruktur
- 30: Ausbringelemente
- 40: Vorratsbehälter
- 41: Tragkonstruktion
- 50: Betätigungseinrichtungen
- L1: zumindest eine Verteilgut-Versorgungsleitung
- L2: Verteilgutleitungen
- 100: Bodenbearbeitungsmaschine, vorzugsweise Hackstriegel
- wd: Arbeitsrichtung der Bodenbearbeitungsmaschine
- M: Mittelachse der Bodenbearbeitungsmaschine

## Patentansprüche

1. Bodenbearbeitungsmaschine (100), vorzugsweise zur zeitgleichen Bodenbearbeitung, insbesondere mechanischen Unkrautbekämpfung, und Verteilung von Verteilgut, mit einem Zinkenfeld (10) mit einer Vielzahl an Zinken (1),
wobei
zumindest eine Verteilervorrichtung (20), die zum Aufteilen von Verteilgut an eine Vielzahl an Ausbringelemente (30) zum Verteilen des Verteilguts eingerichtet ist, in Arbeitsrichtung (wd) der Bodenbearbeitungsmaschine (100) vor und/oder hinter dem Zinkenfeld (10) positioniert ist, wobei
das Zinkenfeld (10) ein Zinken-Mittelteil (13) und mittels ersten Schwenkachsen (pa1) am Zinken-Mittelteil (13) schwenkbar gelagerte Zinken-Seitenteile (11, 12) umfasst, vorzugsweise um die Zinken-Seitenteile (11, 12) in eine Transportstellung schwenken zu können, und wobei jeweils eine Verteilervorrichtung (20) mittels einer Tragstruktur (21) an die Seitenteile (11, 12) angebaut ist, vorzugsweise um gemeinsam mit dem jeweiligen Zinken-Seitenteil (11, 12) schwenkbar sein.

2. Bodenbearbeitungsmaschine (100) nach Anspruch 1, **dadurch gekennzeichnet, dass** die Zinken-Seitenteile (11, 12) jeweils zumindest zwei Teilabschnitte (11.1, 11.2, 12.1, 12.2) aufweisen und die zumindest zwei Teilabschnitte (11.1, 11.2, 12.1, 12.2) jeweils eine zweite Schwenkachse (pa2) umfassen, wobei vorzugsweise die zweiten Schwenkachsen (pa2) im Wesentlichen parallel zu den ersten Schwenkachsen (pa1) ausgerichtet sind und/oder eine zumindest 170°-Klappung ermöglichen.

3. Bodenbearbeitungsmaschine (100) nach einem der vorhergehenden Ansprüche, **dadurch gekennzeichnet, dass** die Bodenbearbeitungsmaschine (100) einen, vorzugsweise mittels zumindest einer Verteilgut-Versorgungsleitung (L1), mit der zumindest einen Verteilervorrichtung (20) verbundenen Vorratsbehälter (40) zum Mitführen und Bereitstellen von Verteilgut aufweist und vorzugsweise der Vorratsbehälter (40)
- hinter dem Zinkenfeld (10) positioniert ist,
- vor dem Zinkenfeld (10) positioniert ist,
- zwischen einer Kopplungseinrichtung zum Ankoppeln an ein Zugfahrzeug und dem Zinkenfeld (10) positioniert ist, und/oder
- als Fronttank zur Anordnung an eine Front eines Zugfahrzeugs ausgebildet ist.

4. Bodenbearbeitungsmaschine (100) nach einem der vorhergehenden Ansprüche, **dadurch gekennzeichnet, dass** die Ausbringelemente (30) im Zinkenfeld (10) und/oder vor dem Zinkenfeld (10) positioniert sind, vorzugsweise so, dass verteiltes Verteilgut mittels der Zinken (1) in den Boden eingearbeitet werden kann.

5. Bodenbearbeitungsmaschine (100) nach einem der vorhergehenden Ansprüche, **dadurch gekennzeichnet, dass** zumindest einige der Ausbringelemente (30) an zumindest einigen der Zinken (1) positioniert und/oder angebaut sind.

6. Bodenbearbeitungsmaschine (100) nach einem der vorhergehenden Ansprüche, **dadurch gekennzeichnet, dass** zumindest einige der Ausbringelemente (30) jeweils ein Prallelement umfassen, vorzugsweise um das Verteilgut flächig und/oder in Form von Streufächern zu verteilen.

7. Bodenbearbeitungsmaschine (100) nach einem der vorhergehenden Ansprüche, **dadurch gekennzeichnet, dass** das Zinken-Mittelteil (13) eine vordere Querbalkenkonstruktion (fb3) und/oder eine hintere Querbalkenkonstruktion (rb3) umfasst und vorzugsweise vorne durch die vordere Querbalkenkonstruktion (fb3) und/oder hinten durch die hintere Querbalkenkonstruktion (rb3) begrenzt wird.

8. Bodenbearbeitungsmaschine (100) nach einem der vorhergehenden Ansprüche, **dadurch gekennzeichnet, dass** zumindest eine Verteilervorrichtung (20)
- mittels einer Tragstruktur an das Zinken-Mittelteil (13) angebaut ist, und/oder
- vor der vorderen Querbalkenkonstruktion (fb3) oder hinter der hinteren Querbalkenkonstruktion (rb3) des Zinken-Mittelteils (13) positioniert ist.

9. Bodenbearbeitungsmaschine (100) nach einem der Ansprüche 3 bis 8, **dadurch gekennzeichnet, dass** der Vorratsbehälter (40)
- mittels einer Tragkonstruktion (41) an das Zinken-Mittelteil (13) angebaut ist, und/oder
- vor der vorderen Querbalkenkonstruktion (fb3) oder hinter der hinteren Querbalkenkonstruktion (rb3) des Zinken-Mittelteils (13) positioniert ist.

10. Bodenbearbeitungsmaschine (100) nach einem der vorhergehenden Ansprüche, **dadurch gekennzeichnet, dass** jeweils eine Verteilervorrichtung (20) vor vorderen Querbalkenkonstruktionen (fb1, fb2) oder hinter hinteren Querbalkenkonstruktionen (rb1, rb2) der Zinken-Seitenteile (11, 12) positioniert ist, vorzugsweise um gemeinsam mit dem jeweiligen Zinken-Seitenteil (11, 12) schwenkbar zu sein.

11. Bodenbearbeitungsmaschine nach einem der vorhergehenden Ansprüche, **dadurch gekennzeichnet, dass** die Verteilervorrichtungen (20) an den Zinken-Seitenteilen (11, 12)
- einen im Wesentlichen gleichen oder unterschiedlichen Seitenabstand zur Mittelachse (M) der Bodenbearbeitungsmaschine (100) aufweisen und/oder
- in Arbeitsrichtung (wd) der Bodenbearbeitungsmaschine (100) versetzt zueinander positioniert sind,
- vorzugsweise um beim Schwenken der Zinken-Seitenteile (11, 12) nicht miteinander zu kollidieren.

12. Bodenbearbeitungsmaschine (100) nach einem der vorhergehenden Ansprüche, **dadurch gekennzeichnet, dass** die zumindest eine Verteilervorrichtung (20) mittels zumindest einer Verteilgut-Versorgungsleitung (L1) mit dem Vorratsbehälter (40) und/oder mittels Verteilgutleitungen (L2) mit den Ausbringelementen (30) verbunden ist und vorzugsweise die zumindest eine Verteilgut-Versorgungsleitung (L1) und/oder die Verteilgutleitungen (L2)
- vor dem Zinkenfeld (10) verlaufen, vorzugsweise ausschließlich,
- hinter dem Zinkenfeld (10) verlaufen, vorzugsweise ausschließlich, und/oder
- nicht über das Zinkenfeld (10) verlaufen.

13. Bodenbearbeitungsmaschine (100) nach einem der vorhergehenden Ansprüche, **dadurch gekennzeichnet, dass**, insbesondere in Arbeitsstellung der Bodenbearbeitungsmaschine (100), das Zinkenfeld (10) definiert ist als das Zinkenfeld (10) zwischen den vorderen Querbalkenkonstruktionen (fb1, f2, fb3) des Zinken-Mittelteils (13) und der Zinken-Seitenteile (11, 12) und den hinteren Querbalkenkonstruktionen (rb1, rb2, rb3) des Zinken-Mittelteils (13) und der Zinken-Seitenteile (11, 12).

14. Bodenbearbeitungsmaschine (100) nach einem der vorhergehenden Ansprüche, **dadurch gekennzeichnet, dass**
- die Zinken (1) Striegelzinken sind,
- die Zinken (1) schwenkbar und/oder höhenverstellbar gelagert sind,
- die Zinken (1) einen Strichabstand orthogonal zur Arbeitsrichtung (wd) der Bodenbearbeitungsmaschine (100) von kleiner 12,5cm, kleiner 10cm, kleiner 7,5cm oder kleiner 5cm aufweisen, und/oder
- das Zinkenfeld (10) eine Vielzahl an Zinkenreihen aufweist und vorzugsweise die Zinkenreihen einen Abstand in Arbeitsrichtung (wd) der Bodenbearbeitungsmaschine (100) von kleiner 35cm, kleiner 30cm, kleiner 25cm oder kleiner 20cm aufweisen.

## Claims

1. Soil-working machine (100), preferably for simultaneous working of the soil, in particular for mechanical weed control, and for distributing material for distribution, having
a tine array (10) with a multiplicity of tines (1), wherein
at least one distributor device (20), which is designed for dividing material for distribution between a multiplicity of dispensing elements (30) for distributing the material for distribution, is positioned in front and/or behind the tine array (10) in the working direction (wd) of the soil-working machine (100), wherein the tine array (10) comprises a tine central part (13) and tine side parts (11, 12), which are mounted pivotably on the tine central part (13) by means of first pivot axes (pa1), preferably in order to be able to pivot the tine side parts (11, 12) into a transport position, and wherein
a distributor device (20) is in each case attached to the side parts (11, 12) by means of a supporting structure (21), preferably so as to be pivotable together with the respective tine side part (11, 12).

2. Soil-working machine (100) according to Claim 1, **characterized in that** the tine side parts (11, 12) each have at least two subsections (11.1, 11.2, 12.1, 12.2), and the at least two subsections (11.1, 11.2, 12.1, 12.2) each comprise a second pivot axis (pa2), wherein, preferably, the second pivot axes (pa2) are oriented substantially parallel to the first pivot axes (pa1) and/or permit folding of at least 170°.

3. Soil-working machine (100) according to either of the preceding claims, **characterized in that** the soil-working machine (100) has a storage container (40), which is connected to the at least one distributor device (20), preferably by means of at least one material-for-distribution supply line (L1), for carrying along and providing material for distribution, and preferably the storage container (40)
- is positioned behind the tine array (10),
- is positioned in front of the tine array (10),
- is positioned between a coupling unit for coupling to a towing vehicle and the tine array (10), and/or
- is designed as a front tank for arranging on a front of a towing vehicle.

4. Soil-working machine (100) according to any one of the preceding claims, **characterized in that** the dispensing elements (30) are positioned in the tine array (10) and/or in front of the tine array (10), preferably in such a way that material for distribution which has been distributed can be incorporated into the soil by means of the tines (1).

5. Soil-working machine (100) according to any one of the preceding claims, **characterized in that** at least some of the dispensing elements (30) are positioned and/or mounted on at least some of the tines (1).

6. Soil-working machine (100) according to any one of the preceding claims, **characterized in that** at least some of the dispensing elements (30) each comprise an impact element, preferably in order to distribute the material for distribution extensively and/or in the form of spreading fans.

7. Soil-working machine (100) according to any one of the preceding claims, **characterized in that** the tine central part (13) comprises a front crossbar construction (fb3) and/or a rear crossbar construction (rb3) and is preferably bounded at the front by the front crossbar construction (fb3) and/or at the rear by the rear crossbar construction (rb3).

8. Soil-working machine (100) according to any one of the preceding claims, **characterized in that** at least one distributor device (20)
- is mounted on the tine central part (13) by means of a supporting structure, and/or
- is positioned in front of the front crossbar construction (fb3) or behind the rear crossbar construction (rb3) of the tine central part (13).

9. Soil-working machine (100) according to any one of Claims 3 to 8, **characterized in that** the storage container (40)
- is mounted on the tine central part (13) by means of a supporting structure (41), and/or
- is positioned in front of the front crossbar construction (fb3) or behind the rear crossbar construction (rb3) of the tine central part (13).

10. Soil-working machine (100) according to any one of the preceding claims, **characterized in that** a distributor device (20) is positioned in each case in front of front crossbar constructions (fb1, fb2) or behind rear crossbar constructions (rb1, rb2) of the tine side parts (11, 12), preferably so as to be pivotable together with the respective tine side part (11, 12).

11. Soil-working machine according to any one of the preceding claims, **characterized in that** the distributor devices (20) on the tine side parts (11, 12)
- have a substantially identical or different lateral distance from the central axis (M) of the soil-working machine (100), and/or
- are positioned offset from one another in the working direction (wd) of the soil-working machine (100),
- preferably so as not to collide with one another during the pivoting of the tine side parts (11, 12).

12. Soil-working machine (100) according to any one of the preceding claims, **characterized in that** the at least one distributor device (20) is connected to the storage container (40) by means of at least one material-for-distribution supply line (L1) and/or is connected to the dispensing elements (30) by means of material-for-distribution lines (L2), and preferably the at least one material-for-distribution supply line (L1) and/or the material-for-distribution lines (L2)
- run in front of the tine array (10), preferably exclusively,
- run behind the tine array (10), preferably exclusively, and/or
- do not run over the tine array (10).

13. Soil-working machine (100) according to any one of the preceding claims, **characterized in that**, in particular in the working position of the soil-working machine (100), the tine array (10) is defined as the tine array (10) between the front crossbar constructions (fb1, f2, fb3) of the tine central part (13) and the tine side parts (11, 12) and the rear crossbar constructions (rb1, rb2, rb3) of the tine central part (13) and the tine side parts (11, 12).

14. Soil-working machine (100) according to any one of the preceding claims, **characterized in that**
- the tines (1) are harrow tines,
- the tines (1) are mounted pivotably and/or height-adjustably,
- the tines (1) have a tine spacing orthogonal to the working direction (wd) of the soil-working machine (100) of less than 12.5cm, less than 10cm, less than 7.5cm or less than 5cm, and/or
- the tine array (10) has a multiplicity of rows of tines and preferably the rows of tines have a distance in the working direction (wd) of the soil-working machine (100) of less than 35cm, less than 30cm, less than 25cm or less than 20cm.

## Revendications

1. Machine de travail du sol (100), destinée de préférence au travail du sol simultané, en particulier à la lutte mécanique contre les mauvaises herbes, et à la distribution de matériau de distribution, avec un champ (10) de dents avec une pluralité de dents (1),
au moins un dispositif de distribution (20), qui est mis au point pour répartir le matériau de distribution à une pluralité d'éléments d'épandage (30) destinés à distribuer le matériau de distribution, étant positionné devant et/ou derrière le champ (10) de dents dans le sens de travail (wd) de la machine de travail du sol (100),
le champ (10) de dents comprenant une partie centrale (13) de dents et des parties latérales (11, 12) de dents montées de manière à pouvoir pivoter sur la partie centrale (13) de dents au moyen de premiers axes de pivotement (pa1), de préférence pour pouvoir faire pivoter les parties latérales (11, 12) de dents dans une position de transport, et
un dispositif de distribution (20) étant monté respectivement sur les parties latérales (11, 12) au moyen d'une structure porteuse (21), de préférence pour pouvoir pivoter conjointement avec la partie latérale (11, 12) respective de dents.

2. Machine de traitement du sol (100) selon la revendication 1, **caractérisée en ce que** les parties latérales (11, 12) de dents comportent chacune au moins deux sections partielles (11.1, 11.2, 12.1, 12.2) et les au moins deux sections partielles (11.1, 11.2, 12.1, 12.2) comprennent chacune un deuxième axe de pivotement (pa2), les deuxièmes axes de pivotement (pa2) étant de préférence orientés sensiblement parallèlement aux premiers axes de pivotement (pa1) et/ou permettant un pliage d'au moins 170°.

3. Machine de traitement du sol (100) selon l'une des revendications précédentes, **caractérisée en ce que** la machine de traitement du sol (100) comporte un réservoir de stockage (40) relié à l'au moins un dispositif de distribution (20) de préférence au moyen d'au moins une conduite d'alimentation (L1) en matériau de distribution, pour transporter et fournir du matériau de distribution, et de préférence le réservoir de stockage (40)
- est positionné derrière le champ (10) de dents,
- est positionné devant le champ (10) de dents,
- est positionné entre un système d'accouplement destiné à l'accouplement à un véhicule tracteur et le champ (10) de dents, et/ou
- est formé comme un réservoir à l'avant destiné à être disposé à l'avant d'un véhicule tracteur.

4. Machine de traitement du sol (100) selon l'une des revendications précédentes, **caractérisée en ce que** les éléments d'épandage (30) sont positionnés dans le champ (10) de dents et/ou devant le champ (10) de dents, de préférence de telle sorte que du matériau de distribution distribué peut être introduit dans le sol au moyen des dents (1).

5. Machine de traitement du sol (100) selon l'une des revendications précédentes, **caractérisée en ce qu'**au moins certains des éléments d'épandage (30) sont positionnés et/ou montés sur au moins certaines des dents (1).

6. Machine de traitement du sol (100) selon l'une des revendications précédentes, **caractérisée en ce qu'**au moins certains des éléments d'épandage (30) comprennent chacun un élément de percussion, de préférence pour distribuer le matériau de distribution sur une surface et/ou sous forme de plages d'épandage.

7. Machine de traitement du sol (100) selon l'une des revendications précédentes, **caractérisée en ce que** la partie centrale (13) de dents comprend une structure de poutre transversale avant (fb3) et/ou une structure de poutre transversale arrière (rb3) et est limitée de préférence à l'avant par la structure de poutre transversale avant (fb3) et/ou à l'arrière par la structure de poutre transversale arrière (rb3).

8. Machine de traitement du sol (100) selon l'une des revendications précédentes, **caractérisée en ce qu'**au moins un dispositif de distribution (20)
- est monté sur la partie centrale (13) de dents au moyen d'une structure porteuse, et/ou
- est positionné devant la structure de poutre transversale avant (fb3) ou derrière la structure de poutre transversale arrière (rb3) de la partie centrale (13) de dents.

9. Machine de traitement du sol (100) selon l'une des revendications 3 à 8, **caractérisée en ce que** le réservoir de stockage (40)
- est monté sur la partie centrale (13) de dents au moyen d'une structure porteuse (41), et/ou
- est positionné devant la structure de poutre transversale avant (fb3) ou derrière la structure de poutre transversale arrière (rb3) de la partie centrale (13) de dents.

10. Machine de travail du sol (100) selon l'une des revendications précédentes, **caractérisée en ce qu'**un dispositif de distribution (20) est disposé respectivement devant des structures de poutre transversale avant (fb1, fb2) ou derrière des structures de poutre transversale arrière (rb1, rb2) des parties latérales (11, 12) de dents, de préférence pour pouvoir pivoter conjointement avec la partie latérale (11, 12) de dents respective.

11. Machine de traitement du sol selon l'une des revendications précédentes, **caractérisée en ce que** les dispositifs de distribution (20) sur les parties latérales (11, 12) de dents
- présentent une distance latérale sensiblement identique ou différente par rapport à l'axe central (M) de la machine de traitement du sol (100) et/ou
- sont positionnés de manière décalée les uns par rapport aux autres dans le sens de travail (wd) de la machine de travail du sol (100),
- de préférence pour ne pas entrer en collision les uns avec les autres lors du pivotement des parties latérales (11, 12) de dents.

12. Machine de traitement du sol (100) selon l'une des revendications précédentes, **caractérisée en ce que** l'au moins un dispositif de distribution (20) est relié au réservoir de stockage (40) au moyen d'au moins une conduite d'alimentation (L1) en matériau de distribution et/ou aux éléments d'épandage (30) au moyen de conduites de matériau de distribution (L2), et de préférence l'au moins une conduite d'alimentation en matériau de distribution (L1) et/ou les conduites de matériau de distribution (L2)
- s'étendent devant le champ (10) de dents, de préférence exclusivement,
- s'étendent derrière le champ (10) de dents, de préférence exclusivement, et/ou
- ne s'étendent pas sur le champ (10) de dents.

13. Machine de traitement du sol (100) selon l'une des revendications précédentes, **caractérisée en ce qu'**en particulier dans la position de travail de la machine de traitement du sol (100), le champ (10) de dents est défini comme le champ (10) de dents entre les structures de poutre transversale avant (fb1, f2, fb3) de la partie centrale (13) de dents et des parties latérales (11, 12) de dents et les structures de poutre transversale arrière (rb1, rb2, rb3) de la partie centrale (13) de dents et des parties latérales (11, 12) de dents.

14. Machine de traitement du sol (100) selon l'une des revendications précédentes, **caractérisée en ce que**
- les dents (1) sont des herses étrilles,
- les dents (1) sont montées de manière à pouvoir pivoter et/ou de manière à pouvoir être ajustées en hauteur,
- les dents (1) présentent un interrang orthogonal au sens de travail (wd) de la machine de travail du sol (100) inférieur à 12,5 cm, inférieur à 10 cm, inférieur à 7,5 cm ou inférieur à 5 cm, et/ou
- le champ (10) de dents présente une pluralité de rangées de dents et, de préférence, les rangées de dents présentent une distance dans le sens de travail (wd) de la machine de travail du sol (100) inférieure à 35 cm, inférieure à 30 cm, inférieure à 25 cm ou inférieure à 20 cm.
